# EUROPÄISCHE PATENTANMELDUNG

(11) **EP 2 975 476 A1**
(43) Veröffentlichungstag der Anmeldung: **20.01.2016**
(21) Anmeldenummer: 14177089.1
(22) Anmeldetag: 15.07.2014
(51) Int. Cl.: G05B 19/418

(54) **Verfahren und industrielle Steuerung zur flexiblen Konfigurierung einer aus einer Anzahl von Funktionsmodulen bestehenden industriellen Automatisierungsanordnung**

(71) Anmelder: Siemens Aktiengesellschaft, 80333 München (DE)
(72) Erfinder: Biehler, Georg, 90453 Nürnberg (DE)

(57) **Zusammenfassung**

Die Erfindung betrifft ein Verfahren und eine Steuerung zur flexiblen Konfigurierung einer aus einer Anzahl von Funktionsmodulen (IOD1, ..., IOD4) bestehenden industriellen Automatisierungsanordnung vorgeschlagen, wobei die Funktionsmodule (IOD1, ..., IOD4) mittels eines Feldbus-Systems kommunikativ mit einer industriellen Steuerung (CPU) verbunden sind, wobei die Steuerung (CPU) mit einem Steuerungsprogramm und mit einer Firmware versehen ist, und wobei zumindest eines der Funktionsmodule (IOD2, IOD3) fallweise funktionales Bestandteil der Automatisierungsanordnung sein soll, oder nicht. Dabei wird in einer Projektierungsphase der Automatisierungsanordnung das zumindest eine Funktionsmodul (IOD2, IOD3) als optionales Funktionsmodul (IOD2, IOD3) definiert, wobei zur Inbetriebsetzung der Automatisierungsanordnung mittels einer Benutzeroberfläche eines mit der Steuerung verbundenen Bedien- und Beobachtungsgerätes oder mittels einer Benutzeroberfläche der Steuerung dem Steuerungsprogramm eine Angabe darüber übermittelt wird, ob das als optional definierte Funktionsmodul (IOD2, IOD3) in Betrieb gesetzt werden soll, oder nicht, und wobei durch das Steuerungsprogramm entsprechend dem Inhalt der Angabe mittels Ansteuerung oder Parametrierung einer Firmware der Steuerung (CPU) die jeweiligen Kommunikationsparameter für die Kommunikation über das Feldbus-System angepasst werden. Durch dieses Verfahren kann anwenderseitig die Automatisierungsanordnung flexibel konfiguriert werden, wobei zur Anpassung der Kommunikation kein neues Programm erstellt wird und somit der Einsatz eines Engineering-Systems nicht erforderlich ist.

## Beschreibung

Die Erfindung betrifft ein Verfahren zur flexiblen Konfigurierung einer aus einer Anzahl von Funktionsmodulen bestehenden industriellen Automatisierungsanordnung gemäß dem Oberbegriff des Patentanspruchs 1, und die Erfindung betrifft eine Steuerung für eine industrielle Automatisierungsanordnung zur Durchführung des Verfahrens gemäß dem Oberbegriff des Patentanspruchs 10.

Moderne industrielle Automatisierungsanordnungen bestehen in der Regel aus zumindest einer Steuerung, auch SPS (SpeicherProgrammierbare-Steuerung) oder CPU (Central Processing Unit) genannt, die mit einer Vielzahl von Funktionsmodulen zusammenwirken. Dabei kann ein Funktionsmodul für einen bestimmten Fertigungsschritt vorgesehen sein, wobei an einem Funktionsmodul beispielsweise alle Sensoren und Aktoren des entsprechenden Produktionsschrittes angeschlossen sind. Beispielsweise kann für eine Produktionsstraße von Gebäck eine Anzahl von Fertigungsschritten nacheinander angeordnet sein, wobei in einem ersten Fertigungsschritt mit einem ersten Funktionsmodul beispielsweise Teigstücke portioniert werden, während in einem späteren Fertigungsschritt diese Teigstücke geformt werden, wofür wiederum ein separates Funktionsmodul zur Steuerung dieses Fertigungsschrittes vorgesehen sein kann.

Üblicher Weise werden solche Automatisierungsanordnungen von Anlagenbauern hergestellt, d.h. sowohl die Hardware wird von den Anlagenbauern geliefert, als auch die Software, die in der zumindest einen Steuerung zum Ablauf gelangt. Ein solcher Anlagenbauer oder Anlagen-Hersteller wird auch häufig "OEM" (Original-Equipment-Manufacturer) genannt.

Die Anlagenbauer, also die "OEM's", verwenden zur Planung und Realisierung der Automatisierungsanordnungen sogenannte Engineering-Tools oder Projektierungs-Einrichtungen, die, wie bereits erwähnt, zur Planung der Hardware-Komponenten und zur Erstellung der notwendigen Software verwendet werden. Die dabei erzeugten Daten, sogenannte Projektierungsinformationen, stellen einerseits eine Art Know-how dar, welches oft nicht an Endkunden gegeben werden soll, andererseits verlangt die Bearbeitung und Änderungen von Projektierungsinformationen auch regelmäßig vertiefte Kenntnisse, die bei einem Endkunden nicht immer vorhanden sind. Sofern ein solcher "OEM" eine Serienmaschine herstellt, also eine Automatisierungsanordnung, die in gleicher oder ähnlicher Ausprägung bei einer Vielzahl von Kunden zum Einsatz kommen soll, oder sofern eine von diesem "OEM" gelieferte Automatisierungsanordnung von Produktionscharge zu Produktionscharge geändert wird, ist es in vielen Fällen notwendig, entsprechend die Projektierungsdaten für den konkreten Anwendungsfall anzupassen und eine neue Variante der zu verwendenden Software zu erstellen. Aus den vorgenannten Gründen muss dies meist seitens des "OEM" geschehen, um zu vermeiden, dass kundenseitig ein Engineering-System angeschafft und bedient werden muss.

Um die damit verbundenden Nachteile, insbesondere das komplexe Handling von Projektierungsdaten an unterschiedlichen Standorten (OEM-Standort einerseits, Produktionsstandort andererseits) zu vermeiden, ist es bekannt, in der Software von industriellen Steuerungen verschiedene Varianten für eine Automatisierungsanordnung vorzusehen, wobei beispielsweise mittels eines Bedien-und Beobachtungsgerätes (HMI = Human-Machine-Interface) das derzeitige Vorhandensein optionaler Funktionsmodule bedienerseitig ausgewählt werden kann. So kann in dem oben genannten Beispiel der Gebäck-Herstellungsanlage ein Modul zur mechanischen Bearbeitung oder Verformung der Gebäckstücke vorhanden sein, welches je nach herzustellender Gebäcksorte in die Produktionsstraße eingegliedert werden kann, oder auch nicht. Fehlt dieses Modul, kann die Steuerung dies berücksichtigen und den entsprechenden Produktionsschritt einfach "auslassen".

Obwohl es die vorgenannte Möglichkeit gewährleistet, dass in vielen Fällen auch ohne Einsatz eines sogenannten Engineering-Systems situationsabhängig eine Automatisierungsanordnung mit unterschiedlichen Funktionsumfängen betrieben werden kann, stößt dies dann an seine Grenzen, wenn die Fallweise zu betreibenden, optionalen Funktionsmodule miteinander und mit der übergeordneten Steuerung (PLC / CPU) mittels eines Feldbus-Systems kommunizieren, wobei im Falle des "Abschaltens" einer in der Kommunikationskette vorgesehenen Einheit oder eines solchen Funktionsmoduls die Kommunikation gestört wäre. Dies betrifft beispielsweise Feldbus-Systeme des Typs "Profinet I/O" und im verstärkten Maße bei der Nutzung des "Profinet IRT"-Protokolls (IRT = Isochronous Realtime). In solchen Fällen kann heutzutage eine Änderung der Automatisierungsanordnung nur realisiert werden, wenn das der Software zu Grunde liegende "Projekt" individuell angepasst und zur Generierung einer entsprechend angepassten Software-Variante verwendet wird.

Um diesen Aufwand kundenseitig nicht vornehmen zu müssen erstellen viele Anlagenhersteller/OEM's für jede kundenseitig geplante Variante ein eigenes Projekt und erstellen daraus eine eigene Software, wobei also den entsprechenden Kunden jeweils eine Vielzahl von Software-Varianten für jeden Anwendungsfall zur Verfügung gestellt wird. Je nach geforderter Flexibilität der Automatisierungsanordnung muss dabei also für jeden Kunden eine Vielzahl von Software-Varianten bereitgestellt und diese sowohl seitens des "OEMs" als auch kundenseitig verwaltet werden, was aufwendig und fehleranfällig ist. Zudem muss bei einer Änderung der Struktur der Automatisierungsanordnung jeweils die entsprechende Steuerung neu programmiert bzw. "geladen" und neu durchgestartet werden, um den unterlagerten Feldbus funktionsfähig zu erhalten.

Es ist also eine Aufgabe der vorliegenden Erfindung, industrielle Automatisierungsanordnungen flexibel konfigurierbar zu machen, insbesondere hinsichtlich der Feldbus-Kommunikation, wobei ein Betreiber der Automatisierungsanordnung von der Verwendung eines Engineering-Systems entlastet werden soll.

Es ist eine Kernidee der erfindungsgemäßen Lösung dieser Aufgabe, dass in dem Steuerungsprogramm für die Automatisierungsanordnung eine Maximal-Konfiguration vorgesehen ist, wobei durch einen Bedienschritt dem Steuerungsprogramm der tatsächlich aktuell genutzte Funktionsumfang mitgeteilt wird. Diese Eingabe kann durch eine physikalische Benutzeroberfläche der Steuerung (z.B. Touch-Display, Tasten oder dgl.), über ein Web-Interface oder mittels anderer Eingabemittel vorgenommen werden; insbesondere kann die Steuerung auch mittels Sensoren den Anlagenzustand, also das Vorhandensein und/oder die tatsächliche Reihenfolge von Funktionsmodulen, selbst erkennen. Aus dieser Information generiert das Steuerungsprogramm Betriebsparameter, die insbesondere die Adressierung und das "Timing" der Feldbus-Kommunikation der Automatisierungsanordnung betreffen, und bringt diese angepassten Parameter zur Anwendung. Erfindungsgemäß geschieht dies durch eine Parametrierung der Firmware der industriellen Steuerung, die die Feldbus-Kommunikation steuert, und ggf. auch durch Parametrierung der angeschlossenen Funktionsmodule oder Feldbus-Geräte ("Devices").

Die Aufgabe wird insbesondere durch das Verfahren gemäß dem Patentanspruch 1 und durch die Steuerung gemäß dem Patentanspruch 10 gelöst.

Dabei wird ein Verfahren zur flexiblen Konfigurierung einer aus einer Anzahl von Funktionsmodulen bestehenden industriellen Automatisierungsanordnung vorgeschlagen, wobei die Funktionsmodule mittels eines Feldbus-Systems kommunikativ mit einer industriellen Steuerung verbunden sind, wobei die Steuerung mit einem Steuerungsprogramm und mit einer Firmware versehen ist, und wobei zumindest eines der Funktionsmodule fallweise funktionales Bestandteil der Automatisierungsanordnung sein soll, oder nicht. Dabei wird in einer Projektierungsphase der Automatisierungsanordnung das zumindest eine Funktionsmodul als optionales Funktionsmodul definiert, wobei zur Inbetriebsetzung der Automatisierungsanordnung mittels einer Benutzeroberfläche eines mit der Steuerung verbundenen Bedien- und Beobachtungsgerätes oder mittels einer Benutzeroberfläche der Steuerung dem Steuerungsprogramm eine Angabe darüber übermittelt wird, ob das als optional definierte Funktionsmodul in Betrieb gesetzt werden soll, oder nicht, und wobei durch das Steuerungsprogramm entsprechend dem Inhalt der Angabe mittels Ansteuerung oder Parametrierung einer Firmware der Steuerung die jeweiligen Kommunikationsparameter für die Kommunikation über das Feldbus-System angepasst werden. Durch dieses Verfahren kann anwenderseitig die Automatisierungsanordnung flexibel konfiguriert werden, wobei zur Anpassung der Kommunikation kein neues Programm erstellt wird und somit der Einsatz eines Engineering-Systems nicht erforderlich ist.

Die Aufgabe wird außerdem durch eine Steuerung für eine industrielle Automatisierungsanordnung gelöst, wobei die Steuerung für eine industrielle Automatisierungsanordnung, wobei die Steuerung und eine Anzahl Funktionsmodule Teil einer industriellen Automatisierungsanordnung sind, wobei die Funktionsmodule mittels eines Feldbus-Systems kommunikativ mit der industriellen Steuerung verbunden sind, wobei die Steuerung mit einem Steuerungsprogramm und mit einer Firmware versehen ist, und wobei zumindest eines der Funktionsmodule fallweise funktionales Bestandteil der Automatisierungsanordnung sein soll, oder nicht. Dabei ist durch eine Projektierung der Automatisierungsanordnung das zumindest eine Funktionsmodul als optionales Funktionsmodul definiert, wobei zur Inbetriebsetzung der Automatisierungsanordnung mittels einer Benutzeroberfläche eines mit der Steuerung verbundenen Bedien- und Beobachtungsgerätes oder mittels einer Benutzeroberfläche der Steuerung einem Steuerungsprogramm der Steuerung eine Angabe darüber übermittelbar ist, ob das als optional definierte Funktionsmodul in Betrieb gesetzt werden soll, oder nicht, und wobei das Steuerungsprogramm der Steuerung derart eingerichtet ist, dass gemäß dem Inhalt der Angabe mittels Ansteuerung oder Parametrierung einer Firmware der Steuerung die entsprechenden Kommunikationsparameter der Kommunikation über das Feldbus-System anpassbar sind. Durch eine solche Steuerung können die bereits mit dem Verfahren diskutierten Vorteile realisiert werden.

Vorteilhafte Ausgestaltungen des erfindungsgemäßen Verfahrens sind in den abhängigen Patentansprüchen 2 bis 8 angegeben; vorteilhafte Ausgestaltungen der erfindungsgemäßen industriellen Steuerung sind in den abhängigen Patentansprüchen 10 bis 16 angegeben. Die jeweils beschriebenen Merkmale und deren Vorteile können einzeln, als auch in Kombination miteinander realisiert werden.

Die Steuerung und/oder die Funktionsmodule weisen jeweils Ports im Sinne eines physikalischen Anschlusses (z.B. Ethernet-Anschluss) für die Kommunikation über das Feldbus-System auf, wobei in der Projektierungsphase vorteilhaft zumindest denjenigen der Ports, die für eine Kommunikation zwischen der Steuerung und einem als optional definierten Funktionsmodul vorgesehen sind, jeweils ein Projektierungsstatus zugeordnet wird. Damit kann bereits zum Projektierungszeitpunkt festgelegt werden, welche Ports bei einer Umkonfigurierung der Automatisierungsanordnung hinsichtlich ihrer Kommunikationsparameter angepasst werden müssen, und welche nicht. Außerdem können so auch "ungültige" Varianten von vornherein vermieden werden. Dabei ergibt sich eine einfache Bedienung, wenn der Projektierungsstatus aus einer Anzahl von möglicher Projektierungsstati ausgewählt wird, beispielsweise mittels eines Drop-Down-Menüs, wobei der Projektierungsstatus jeweils angibt, welche Zustände der jeweilige Port durch die Inbetriebsetzung annehmen darf, und welche nicht. In einer vorteilhaften Variante, in dem ein Funktionsmodul ein Kommunikationsmodul mit einer Mehrzahl Ports aufweist, wird dabei jeweils automatisch derselbe Projektierungsstatus allen Ports dieses Kommunikationsmoduls zugeordnet, was die Bedienung vereinfacht und zur Fehlervermeidung beiträgt.

Vorteilhaft betrifft die flexible Konfigurierung nicht nur die Kommunikationsparameter, sondern auch die funktionalen Software-Module des Steuerungsprogramms, wobei durch das Steuerungsprogramm bei der Inbetriebsetzung solche funktionale Software-Module, die den Betrieb eines als optional definierten Funktionsmoduls betreffen, gemäß dem Inhalt der Angabe über den jeweils zur realisierenden Funktionsumfang der Automatisierungsanordnung aktiviert oder deaktiviert werden.

Vorteilhaft werden als die Kommunikationsparameter zumindest Adressen und/oder Verzögerungszeiten bei der protokollgemäßen Übertragung von Datenpaketen entsprechend dem jeweiligen Umfang an Funktionsmodulen angepasst. Bei Wegfall oder Hinzunahme sog. "Forwarder", Switche oder anderer zwischengeschalteter Komponenten einer Kommunikationskette kann vorteilhaft auch das Routing der Nachrichten angepasst werden. Darüber hinaus werden vorteilhaft für solche Funktionsmodule, die im laufenden Betrieb deaktiviert sind, Fehlermeldungen unterdrückt, insbesondere solche Fehlermeldungen, die auf eine Störung einer Kommunikationsbeziehung zwischen diesen deaktivierten Funktionsmodulen und der Steuerung oder anderen Funktionsmodulen gerichtet sind.

Zur Erleichterung der Bedienung kann bereits in der Projektierungsphase der Automatisierungsanordnung eine Anzahl von Varianten der Automatisierungsanordnung definiert werden, wobei für jede der Varianten eine Information darüber festgelegt wird, ob das zumindest eine Funktionsmodul funktionales Bestandteil der jeweiligen Variante ist, oder nicht. In diesem Fall kann als Angabe darüber, ob das als optional definierte Funktionsmodul im Betrieb gesetzt werden soll, oder nicht, über die Benutzeroberfläche eine der Varianten ausgewählt werden, womit gleichzeitig der entsprechende Status einer Vielzahl anderer Funktionsmodule und Kommunikationsmodule festgelegt werden kann.

Neben der Festlegung über das Vorhandensein optionaler Funktionsmodule zur Laufzeit bzw. seitens des Betreibers einer Automatisierungsanordnung, kann durch das Verfahren ebenfalls zu diesem Zeitpunkt die Reihenfolge der Funktionsmodule angepasst werden, sofern dies durch die Projektierung oder Programmierung vorgesehen worden ist.

Ein Ausführungsbeispiel des erfindungsgemäßen Verfahrens wird nachfolgend anhand der Zeichnungen erläutert; dieses Ausführungsbeispiel dient gleichzeitig der Erläuterung einer erfindungsgemäßen industriellen Steuerung.

Dabei zeigen:
- Figur 1: in schematischer Darstellung eine industrielle Steuerung und vier Funktionsmodule, die über ein Feldbus-System kommunizieren, und
- Figur 2: in schematischer Darstellung die Ermittlung eines Kommunikationsparameters für den Fall einer flexiblen Konfiguration der Automatisierungsanordnung.

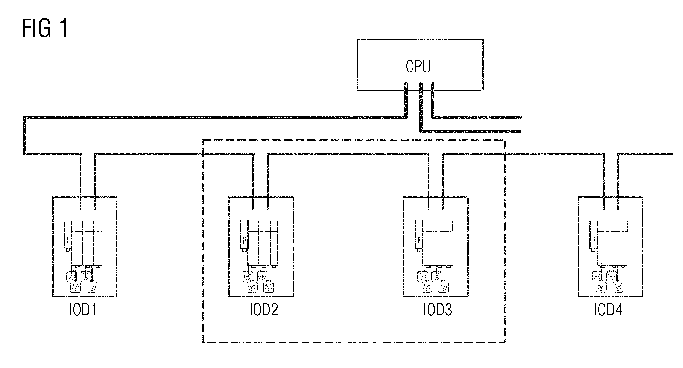

In der Figur 1 ist schematisch und stark vereinfacht eine industrielle Automatisierungsanordnung gezeigt, die von einer einzigen speicherprogrammierbaren Steuerung CPU gesteuert wird. Über ein Feldbus-System sind vier Funktionsmodule IOD1, ..., IOD4 ("I/O-Devices") mit der Steuerung CPU verbunden.

Es soll an dieser Stelle darauf hingewiesen werden, dass im Folgenden die genannten Funktionsmodule IOD1, ..., IOD4 gleichzeitig als Kommunikationsmodule gesehen werden, die über das Feldbus-System kommunizieren. In einer realen, nichtabstrahierten Automatisierungsanordnung sind Kommunikationsmodule und Funktionsmodule getrennt zu betrachten, d.h., dass die Kommunikationsmodule den Datenaustausch bewerkstelligen, während die Funktionsmodule aus Sensoren, Aktoren und anderen Betriebsmitteln bestehen und somit die Schnittstelle zur "realen Welt" darstellen. Im Rahmen der Erläuterungen dieses Ausführungsbeispiels soll jedoch lediglich auf die Kommunikation eingegangen werden, so dass die Funktionsmodule IOD1, ..., IOD4 hier funktional als Kommunikationsmodule betrachtet werden sollen.

Es sei angenommen, dass es sich bei der gezeigten Automatisierungsanordnung um eine flexibel zu konfigurierende Fertigungsanlage handelt, wobei die Funktionsmodule IOD2, IOD3 in manchen Fällen nicht zum Einsatz kommen sollen, in anderen Fällen jedoch benötigt werden. Die Umrandung mit der gestrichelten Linie soll dabei in der Figur 1 andeuten, dass die genannten Funktionsmodule IOD2, IOD3 zu einer Variante der Automatisierungsanordnung gehören, wobei diese Variante gegenüber dem "Vollausbau" einen reduzierten Umfang aufweist.

Es sei weiter angenommen, dass ein Bediener der Automatisierungsanordnung an einem Bedien- und Beobachtungsgerät (nicht gezeigt) einstellen kann, ob er die Automatisierungsanordnung in einer ersten Variante mit allen Funktionsmodulen IOD1, ..., IOD4 (Vollausbau) oder in einer zweiten, "reduzierten" Variante mit den Funktionsmodulen IOD1, IOD4 betreiben möchte. Entsprechend werden in einer Betriebs-Software der Steuerung CPU diejenigen Software-Module, die den Betrieb der Funktionsmodule IOD2, IOD3 betreffen, nur bei der ersten Variante (Vollausbau) abgearbeitet.

In einer Ausgestaltung der Erfindung kann ein Benutzer die entsprechende Eingabe auch direkt an der Steuerung CPU vornehmen; alternativ kann auch vorgesehen sein, dass mittels geeigneter Sensoren die Steuerung CPU feststellt, ob sich die Funktionsmodule IOD2, IOD3 im "Bearbeitungspfad" der Automatisierungsanordnung befinden, oder nicht.

Nachdem feststeht, in welcher Variante die Automatisierungsanordnung künftig betrieben werden soll, wird diese Information durch die Steuerung CPU verarbeitet, was idealer Weise dadurch geschieht, dass die gewünschte Situation vom Anwenderprogramm an eine Firmware der Steuerung CPU gemeldet wird. Diese Firmware modifiziert danach die Konfiguration, die aus dem "Masterprojekt" stammt und die maximal auf den "Vollausbau" der Automatisierungsanordnung gerichtet ist, und konfiguriert die Kommunikation der Funktionsmodule IOD1, ..., IOD4 entsprechend der reduzierten Variante neu.

Es soll angenommen werden, dass die Kommunikation mittels des Protokolls Profinet IRT abläuft. Dazu werden die Daten aus dem "Masterprojekt" wie folgt modifiziert:
- Abwerfen aller IODs des entsprechenden I/O-Systems,
- Nicht gewählte optionale IODs werden deaktiviert; d.h.
   sie nehmen nicht an der Konfiguration teil und produzieren auch keine Fehler,
- Modifikation der in der CPU vorliegenden PDPortDataCheck Datensätze für die IODs bezüglich der nicht gewählten optionalen IODs, damit diese Ports keine Fehler erzeugen,
- Modifikation der in der CPU vorliegenden StationNameAlias für die IODs bezüglich der nicht gewählten optionalen IODs, damit nach Gerätetausch die IODs entsprechend "getauft" (mit Stationsnamen versehen) werden.

Das Deaktivieren einzelner Funktionsmodule hat also Einfluss auf die Konfigurierung "PDIRData" aller der Funktionsmodule, die mit den deaktivierten Funktionsmodulen in einer Kommunikationsbeziehung stehen können. Durch die Anpassung der Parameter ist gewährleistet, dass:
- das Timing der "Frames" (Nachrichten) durch Modifizierung des Parameters "MaxLineRxDelay" aller Kommunikationspartner der deaktivierten Funktionsmodule (disabled IODs) erhalten bleibt; dazu werden sowohl die nunmehr "ausgefallenen" Leitungsverzögerungen (LineDelays) als auch die nunmehr beim Weiterleiten (Forwarding) nicht mehr auftretenden Verarbeitungszeiten (BridgeDelays) entsprechend anderweitig in das Timing addiert und somit der Wegfall der Funktionsmodule IOD2, IOD3 und der zugehörigen Übertragungsstrecken (lines) im Timing kompensiert,
- "Frames", die für deaktivierte Funktionsmodule bestimmt sind, aus der Konfiguration ("PDIRFrameData") aller verbleibenden Funktionsmodule entfernt werden, die auf diese "Frames" eingestellt sind (z.B. absolute "Forwarder" im Kommunikationspfad und aus einem I/O-Controller (nicht dargestellt)), und
- solche Anschlüsse, die nunmehr am Ende einer abgeschlossenen Kommunikationsstrecke (truncated sync domain) angeordnet sind, entsprechend umkonfiguriert werden.

Dabei werden die im vorliegenden Fall optionalen, also nichtverwendeten Funktionsmodule IOD2, IOD3 bei der realen Maschine überbrückt, d.h., dass diese aus dem Kommunikationspfad entfernt werden.

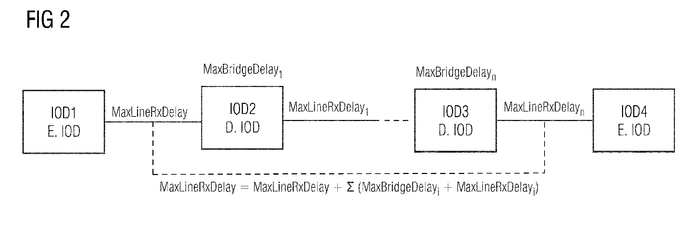

Zur Erläuterung der Auswirkungen des Entfernens der Funktionsmodule IOD2, IOD3 aus dem Kommunikationspfad soll nun die Figur 2 diskutiert werden. Die Funktionsmodule IOD1, ..., IOD4 sind nacheinander geschaltet. Dies bedeutet, dass Datenpakete von einem Funktionsmodul zum nächsten weitergereicht werden. Da die Datenpakete gemäß eines Zeitschlitzverfahrens immer im "richtigen" Zeitfenster (Timeslot) übertragen werden müssen, muss für den Fall, dass ein oder mehrere Funktionsmodule überbrückt worden sind, die entsprechenden Datenpakete beim sendenden Funktionsmodul so lange verzögert werden, bis die Verzögerungen, die bei einem Vollausbau durch die mittlerweile deaktivierten Funktionsmodule aufgetreten wären, verstrichen sind. D.h., dass bei einem Wegfall einzelner Funktionsmodule die Weiterleitung oder der Empfang von Datenpaketen bzw. Meldungen entsprechend "künstlich" verzögert werden muss, so dass für ein- und dasselbe Datenpaket immer dasselbe Zeitfenster in der Kommunikation verwendet wird, unabhängig davon, ob einzelne Funktionsmodule überbrückt worden sind, oder nicht. In der Figur 2 ist dazu exemplarisch die Berechnung der anzuwendenden Verzögerungszeit "MaxLineRxDelay" für den Fall gezeigt, in dem die Funktionsmodule IOD2, IOD3 nicht am Kommunikationsverkehr teilnehmen. In der Figur 2 bezeichnet die Abkürzung "E. IOD" dabei aktivierte ("enabled") Funktionsmodule, während mit "D. IOD" deaktivierte ("disabled") Funktionsmodule bezeichnet sind.

Der Kommunikationspfad, der sich ergibt, wenn die Funktionsmodule IOD2, IOD3 deaktiviert sind, wird auch als "Tailored" bezeichnet, weil es sich dabei um eine "maßgeschneiderte" Variante der Automatisierungsanordnung handelt. Die komplette Struktur, die also dem "Vollausbau" entspricht, wird dagegen auch als "configured" bezeichnet, weil dies der Ausbaustand ist, der alle konfigurierten, vorgesehenen Funktionsmodule umfasst.

Durch ein dynamisches Anpassen des "Timings" und der Adressierung von Kommunikationsmodulen ist es also möglich, im Betrieb einzelne Funktionsmodule zu überbrücken bzw. in der Kommunikation zu überspringen, ohne eine neue, angepasste Software zur Ausführung bringen zu müssen.

## Patentansprüche

1. Verfahren zur flexiblen Konfigurierung einer aus einer Anzahl von Funktionsmodulen (IOD1, ..., IOD4) bestehenden industriellen Automatisierungsanordnung,
wobei die Funktionsmodule (IOD1, ..., IOD4) mittels eines Feldbus-Systems kommunikativ mit einer industriellen Steuerung (CPU) verbunden sind,
wobei die Steuerung (CPU) mit einem Steuerungsprogramm und mit einer Firmware versehen ist, und
wobei zumindest eines der Funktionsmodule (IOD1, ..., IOD4) fallweise funktionales Bestandteil der Automatisierungsanordnung sein soll, oder nicht,
**dadurch gekennzeichnet,**
**dass** in einer Projektierungsphase der Automatisierungsanordnung das zumindest eine Funktionsmodul (IOD1, ..., IOD4) als optionales Funktionsmodul (IOD2, IOD3) definiert wird,
**dass** zur Inbetriebsetzung der Automatisierungsanordnung mittels einer Benutzeroberfläche eines mit der Steuerung (CPU) verbundenen Bedien- und Beobachtungsgerätes oder mittels einer Benutzeroberfläche der Steuerung (CPU) dem Steuerungsprogramm eine Angabe darüber übermittelt wird, ob das als optional definierte Funktionsmodul (IOD2, IOD3) in Betrieb gesetzt werden soll, oder nicht, und
**dass** durch das Steuerungsprogramm entsprechend dem Inhalt der Angabe mittels Ansteuerung oder Parametrierung einer Firmware der Steuerung (CPU) die jeweiligen Kommunikationsparameter für die Kommunikation über das Feldbus-System angepasst werden.

2. Verfahren nach Patentanspruch 1,
**dadurch gekennzeichnet,**
**dass** die Steuerung (CPU) und/oder die Funktionsmodule (IOD1, ..., IOD4) jeweils Ports für die Kommunikation über das Feldbus-System aufweisen,
wobei in der Projektierungsphase zumindest denjenigen der Ports, die für eine Kommunikation zwischen der Steuerung (CPU) und einem als optional definierten Funktionsmodul (IOD2, IOD3) vorgesehen sind, jeweils ein Projektierungsstatus zugeordnet wird.

3. Verfahren nach Patentanspruch 2,
**dadurch gekennzeichnet,**
**dass** der Projektierungsstatus aus einer Anzahl möglicher Projektierungsstati ausgewählt wird, wobei der Projektierungsstatus jeweils angibt, welche Zustände der jeweilige Port durch die Inbetriebsetzung annehmen darf.

4. Verfahren nach Patentanspruch 2 oder 3,
**dadurch gekennzeichnet,**
**dass** das zumindest eine Funktionsmodul (IOD1, ..., IOD4) ein Kommunikationsmodul mit einer Mehrzahl Ports aufweist, wobei jeweils derselbe Projektierungsstatus allen Ports des Kommunikationsmoduls zugeordnet wird.

5. Verfahren nach einem der vorhergehenden Patentansprüche,
**dadurch gekennzeichnet,**
**dass** durch das Steuerungsprogramm bei der Inbetriebsetzung funktionale Softwaremodule des Steuerungsprogramms, die den Betrieb eines als optional definierten Funktionsmodules (IOD2, IOD3) betreffen, gemäß dem Inhalt der Angabe aktiviert oder deaktiviert werden.

6. Verfahren nach einem der vorhergehenden Patentansprüche,
**dadurch gekennzeichnet,**
**dass** als die Kommunikationsparameter Adressen und/oder Verzögerungszeiten angepasst werden.

7. Verfahren nach einem der vorhergehenden Patentansprüche,
**dadurch gekennzeichnet,**
**dass** für solche Funktionsmodule(IOD2, IOD3), die im laufenden Betrieb deaktiviert sind, keine Fehlermeldungen erzeugt werden, insbesondere solche Fehlermeldungen, die auf eine Störung einer Kommunikationsbeziehung zwischen diesen Funktionsmodulen (IOD2, IOD3) und der Steuerung (CPU) oder anderen Funktionsmodulen (IOD1, ..., IOD4) gerichtet sind.

8. Verfahren nach einem der vorhergehenden Patentansprüche,
**dadurch gekennzeichnet,**
**dass** in der Projektierungsphase der Automatisierungsanordnung eine Anzahl Varianten der Automatisierungsanordnung definiert wird, wobei für jede der Varianten eine Information darüber festgelegt wird, ob das zumindest eine Funktionsmodul (IOD1, ..., IOD4) funktionales Bestandteil der jeweiligen Variante ist, oder nicht, und
**dass** als Angabe darüber, ob das als optional definierte Funktionsmodul (IOD2, IOD3) in Betrieb gesetzt werden soll, oder nicht, über die Benutzeroberfläche eine der Varianten ausgewählt wird.

9. Verfahren nach einem der vorhergehenden Patentansprüche,
**dadurch gekennzeichnet,**
**dass** zur Inbetriebsetzung der Automatisierungsanordnung dem Steuerungsprogramm eine Angabe über die räumliche und/oder logische Reihenfolge der Funktionsmodule (IOD1, ..., IOD4) eingegeben wird, und
**dass** durch das Steuerungsprogramm entsprechend dieser Angabe mittels Ansteuerung oder Parametrierung einer Firmware der Steuerung (CPU) die jeweiligen Kommunikationsparameter für die Kommunikation über das Feldbus-System angepasst werden.

10. Steuerung (CPU) für eine industrielle Automatisierungsanordnung,
wobei die Steuerung (CPU) und eine Anzahl Funktionsmodule (IOD1, ..., IOD4) Teil einer industriellen Automatisierungsanordnung sind,
wobei die Funktionsmodule (IOD1, ..., IOD4) mittels eines Feldbus-Systems kommunikativ mit der industriellen Steuerung (CPU) verbunden sind,
wobei die Steuerung (CPU) mit einem Steuerungsprogramm und mit einer Firmware versehen ist, und
wobei zumindest eines der Funktionsmodule (IOD2, IOD3) fallweise funktionales Bestandteil der Automatisierungsanordnung sein soll, oder nicht,
**dadurch gekennzeichnet,**
**dass** durch eine Projektierung der Automatisierungsanordnung das zumindest eine Funktionsmodul (IOD2, IOD3) als optionales Funktionsmodul (IOD2, IOD3) definiert ist,
**dass** zur Inbetriebsetzung der Automatisierungsanordnung mittels einer Benutzeroberfläche eines mit der Steuerung (CPU) verbundenen Bedien- und Beobachtungsgerätes oder mittels einer Benutzeroberfläche der Steuerung (CPU) einem Steuerungsprogramm der Steuerung (CPU) eine Angabe darüber übermittelbar ist, ob das als optional definierte Funktionsmodul (IOD2, IOD3) in Betrieb gesetzt werden soll, oder nicht, und
**dass** das Steuerungsprogramm der Steuerung (CPU) derart eingerichtet ist, dass gemäß dem Inhalt der Angabe mittels Ansteuerung oder Parametrierung einer Firmware der Steuerung (CPU) die entsprechenden Kommunikationsparameter der Kommunikation über das Feldbus-System anpassbar sind.

11. Steuerung (CPU) nach Patentanspruch 10,
**dadurch gekennzeichnet,**
**dass** die Steuerung (CPU) und/oder die Funktionsmodule (IOD1, ..., IOD4) jeweils Ports für die Kommunikation über das Feldbus-System aufweisen,
wobei vorgesehen ist, dass während einer Projektierungsphase zumindest denjenigen der Ports, die für eine Kommunikation zwischen der Steuerung (CPU) und einem als optional definierten Funktionsmodul (IOD2, IOD3)vorgesehen sind, jeweils ein Projektierungsstatus zugeordnet ist.

12. Steuerung (CPU) nach Patentanspruch 11,
**dadurch gekennzeichnet,**
**dass** der zugeordnete Projektierungsstatus einer aus einer Anzahl möglicher Projektierungsstati ist,
wobei durch den Projektierungsstatus jeweils angegeben ist, welche möglichen Zustände der jeweilige Port durch die Inbetriebsetzung annehmen kann.

13. Steuerung (CPU) nach Patentanspruch 11 oder 12,
**dadurch gekennzeichnet,**
**dass** das zumindest eine Funktionsmodul (IOD2, IOD3) ein Kommunikationsmodul mit einer Mehrzahl Ports aufweist,
wobei derselbe Projektierungsstatus jeweils für alle Ports des Kommunikationsmoduls gilt.

14. Steuerung (CPU) nach einem der Patentansprüche 10 bis 13,
**dadurch gekennzeichnet,**
**dass** die Steuerung (CPU) derart eingerichtet ist, dass durch das Steuerungsprogramm bei der Inbetriebsetzung funktionale Softwaremodule des Steuerungsprogramms, die den Betrieb eines als optional definierten Funktionsmoduls (IOD2, IOD3) betreffen, gemäß dem Inhalt der Angabe aktivierbar oder deaktivierbar sind.

15. Steuerung (CPU) nach einem der Patentansprüche 10 bis 14,
**dadurch gekennzeichnet,**
**dass** als die Kommunikationsparameter Adressen und/oder Verzögerungszeiten für die Datenübertragung mittels des Feldbus-Systems anpassbar sind.

16. Steuerung (CPU) nach einem der Patentansprüche 10 bis 15,
**dadurch gekennzeichnet,**
**dass** die Steuerung (CPU) derart eingerichtet ist, dass für solche Funktionsmodule (IOD2, IOD3), die im laufenden Betrieb deaktiviert sind, Fehlermeldungen unterdrückt werden, insbesondere solche Fehlermeldungen, die auf die Störung einer Kommunikationsbeziehung zwischen diesen Funktionsmodulen (IOD2, IOD3) und der Steuerung (CPU) oder anderen Funktionsmodulen (IOD1, ..., IOD4) gerichtet sind.

17. Steuerung (CPU) nach einem der Patentansprüche 10 bis 16,
**dadurch gekennzeichnet,**
**dass** durch die Projektierungsphase der Automatisierungsanordnung eine Anzahl Varianten der Automatisierungsanordnung definiert sind, wobei für jede der Varianten eine Information darüber festgelegt ist, ob das zumindest eine Funktionsmodul (IOD2, IOD3) funktionales Bestandteil der jeweiligen Variante ist, oder nicht, und
**dass** als Angabe darüber, ob das als optional definierte Funktionsmodul (IOD2, IOD3) in Betrieb gesetzt werden soll, oder nicht, über die Benutzeroberfläche eine der Varianten auswählbar ist.

18. Steuerung (CPU) nach einem der Patentansprüche 10 bis 17,
**dadurch gekennzeichnet,**
**dass** zur Inbetriebsetzung der Automatisierungsanordnung eine Angabe über die räumliche und/oder logische Reihenfolge der Funktionsmodule (I0D1, ..., IOD4) eingebbar ist wird, und
**dass** das Steuerungsprogramm dazu eingerichtet ist, entsprechend dieser Angabe mittels Ansteuerung oder Parametrierung einer Firmware der Steuerung (CPU) die jeweiligen Kommunikationsparameter für die Kommunikation über das Feldbus-System anzupassen.
